# EUROPEAN PATENT APPLICATION

(11) **EP 4 583 399 A1**
(43) Date of publication of application: **09.07.2025**
(21) Application number: 22957088.2
(22) Date of filing: 12.10.2022
(51) Int. Cl.: H02P 25/092

(54) **ELECTRIC DRIVE SYSTEM, METHOD, APPARATUS, STORAGE MEDIUM, ELECTRONIC DEVICE, AND ELECTRIC VEHICLE**

(30) Priority: 29.08.2022 CN 202211051783
(71) Applicant: CRRC Zhuzhou Electric Locomotive Research Institute Co., Ltd., Zhuzhou, Hunan 412001 (CN)
(72) Inventor: DOU, Zechun, Zhuzhou, Hunan 412001 (CN); QI, Yu, Zhuzhou, Hunan 412001 (CN); TAN, Bo, Zhuzhou, Hunan 412001 (CN)
(74) Representative: Laine IP Oy
(86) International application number: PCT/CN2022/124870
(87) International publication number: WO 2024/045271

(57) **Abstract**

The present disclosure relates to the technical field of electric vehicle engineering, and in particular to an electric drive system, a method, an apparatus, a storage medium, an electronic device, and an electric vehicle. A motor and a converter are provided; the motor is configured to comprise a first winding and a second winding; the converter is configured to comprise a first three-phase bridge and a second three-phase bridge; an input end of the first three-phase bridge is configured to be connected to a power source, and an output end of the first three-phase bridge is configured to be connected to the first winding of the motor; and an input end of the second three-phase bridge is configured to be connected to the power source, and an output end of the second three-phase bridge is configured to be connected to the second winding of the motor.

## Description

### Cross-reference to Related Applications

The present disclosure claims the priority of Chinese Patent Application CN202211051783.7, entitled "Electric Drive System, Method, Apparatus, Storage Medium, Electronic Device, and Electric Vehicle" and filed on August 29, 2022, the entirety of which is incorporated herein by reference.

### Field of the Invention

The present disclosure relates to the technical field of electric vehicle engineering, and in particular to an electric drive system, and a method, apparatus, storage medium, electronic device and electric vehicle of the same.

### Background of the Invention

In an electric vehicle, an electric drive is a core component that transforms electric energy into mechanical energy, and is formed by a converter, a motor, and a transmission device. The converter is a core unit that converts a direct current provided by a battery of the electric vehicle into an alternating current usable by the motor and controls the motor then; the motor is a unit that transforms the electric energy into the mechanical energy; and the transmission device is a unit that transfers the mechanical energy to a mechanical system of the vehicle.

There is an urgent need in the art for a solution to solve the technical problem that it is difficult to reconcile the performance and the cost of the electric drive system.

### Summary of the Invention

The present disclosure provides an electric drive system, and a method, apparatus, storage medium, electronic device, and electric vehicle of the same, which solve the technical problem that it is difficult to reconcile the performance and the cost of an electric drive system in some technical schemes.

In a first aspect, the present disclosure provides an electric drive system, which includes a motor and a converter; the motor includes a first winding and a second winding; the converter includes a first three-phase bridge and a second three-phase bridge; an input end of the first three-phase bridge is connected to a power source, and an output end of the first three-phase bridge is connected to the first winding of the motor; and an input end of the second three-phase bridge is connected to the power source, and an output end of the second three-phase bridge is connected to the second winding of the motor.

In a second aspect, the present disclosure provides a control method on the basis of the electric drive system according to any one of the first aspect, which includes a step of: superposing a waveform of the first three-phase bridge and a waveform of the second three-phase bridge to eliminate a sawtooth wave of the first three-phase bridge and obtain a waveform containing only a sawtooth wave of the second three-phase bridge.

In a third aspect, the present disclosure provides a control apparatus on the basis of the electric drive system according to any one of the first aspect, including a control unit, which is configured to superpose a waveform of the first three-phase bridge and a waveform of the second three-phase bridge to eliminate a sawtooth wave of the first three-phase bridge and obtain a waveform containing only a sawtooth wave of the second three-phase bridge.

In a fourth aspect, the present disclosure provides a computer readable storage medium, on which a computer program is stored, wherein the computer program, when being executed by a processor, implements the method according to the second aspect.

In a fifth aspect, the present disclosure provides an electronic device, which includes a processor and a memory on which a computer program is stored, wherein the computer program, when being executed by the processor, implements the method according to the second aspect.

In a sixth aspect, the present disclosure provides an electric vehicle, which includes the electric drive system according to any one of the first aspect.

### Brief Description of the Drawings

The present disclosure will be described in a more detailed way below based on embodiments and with reference to the accompanying drawings, in which:
Fig. 1 schematically shows a structure of an electric drive system provided by the present disclosure;
Fig. 2 schematically shows a structure of another electric drive system provided by the present disclosure;
Fig. 3 schematically shows a flowchart of a control method of the electric drive system provided by the present disclosure; and
Fig. 4 schematically shows a waveform of a control method of the electric drive system provided by the present disclosure.

In the accompanying drawings, same reference numerals are used for same components, and the accompanying drawings are drawn without taking an actual scale.

Reference numerals:
first three-phase bridge-100, second three-phase bridge-200, motor-300, supportive capacitor-400.

### Detailed Description of the Embodiments

In order to make those skilled in the art better understand technical solutions of the present disclosure, fully understand executing processes that how to solve the technical problem by the technical means according to the present disclosure and achieve the technical effects thereof, and implement them accordingly. the technical solutions in the present disclosure will be described in a clear and complete manner in conjunction with accompanying drawings in the present disclosure. Apparently, embodiments described are only some, rather than all, embodiments of the present disclosure. Various features in the present disclosure and in the embodiments can be combined with each other under the premise of no conflict, and the technical solutions formed thereby all fall into the protection scope of the present disclosure. All other embodiments obtained by those of ordinary skills in the art based on the embodiments of the present disclosure shall all fall into the protection scope of the present disclosure

It should be noted that, wordings such as "first" and "second" used in the description, claims, and accompanying drawings of the present disclosure are used to distinguish similar objects, and are not necessarily used to describe a particular order or sequence. It should be understood that the wordings used in such a way may be interchanged appropriately, so that embodiments of the present disclosure described herein can be implemented in an order other than those illustrated or described herein. In addition, wordings such as "comprise", "include", and any variations thereof are intended to cover a non-exclusive inclusion. For example, a process, method, system, product, or device including a series of steps or units are not necessarily limited to those steps or units clearly listed, but can include other steps or units that are not clearly listed or inherent to the process, method, product, or device.

It should be noted that, steps illustrated in the flowchart of the accompanying drawings may be executed in a computer system, such as a set of computer executable instructions, and although a logical sequence is shown in the flowchart, steps illustrated or described may be carried out in an order different from the order herein in some circumstances.

The present disclosure belongs to the field of electric vehicle engineering, and relates to an electric drive based on mix-use of power devices as well as a non-equal power dual three-phase motor. The electric drive is mounted on an electric vehicle. A converter in the electric drive transforms direct-current electric energy in a battery of the electric vehicle into alternating-current electric energy required by a motor of the electric vehicle, and the motor of the electric vehicle transforms the electric energy into mechanical energy, so that the electric vehicle is provided with motive force for motion.

With the constant advancement of the trend of carbon peaking and carbon neutrality, low-carbon transportation has become an important means to achieve the goal of carbon peaking and carbon neutrality. Electric vehicles, as a transportation means that only uses the electric energy and is free of carbon emission, plays an important role in the process of carbon peaking and carbon neutrality. In an electric vehicle, an electric drive is a core component that transforms electric energy into mechanical energy, and is formed by a converter, a motor, and a transmission device. The converter is a core unit that converts a direct current provided by a battery of the electric vehicle into an alternating current usable by the motor and controls the motor then; the motor is a unit that transforms the electric energy into the mechanical energy; and the transmission device is a unit that transfers the mechanical energy to a mechanical system of the vehicle.

For the converter in the electric drive, also referred to as an electronic control of the vehicle, its core device is a semiconductor controllable power device, and transformation between electric energy forms and control of electric energy features are realized by topological combination and on-off control of such devices. There are two types of major power devices for the converter of the electric drive in the electric vehicle: a silicon (Si) device and a silicon carbide (SiC) device. The silicon device is a currently mainstream device and has features of low cost, high switching loss, low switching speed, so that a converter formed by the silicon devices has features such as low cost, high loss, low efficiency, and high level of harmonics; the silicon carbide device is an emerging device and has features of high cost, low switching loss, high switching speed, so that a converter formed by the silicon carbide devices has features such as high cost, low loss, high efficiency, and low level of harmonics. In a word, the silicon device has a low cost but a low performance, while the silicon carbide device has a high cost but a high performance.

For the motor in the electric drive, a permanent magnet motor is generally selected, and a common structure thereof is formed by a three-phase winding and a permanent magnet (referred to as a single three-phase motor for short). By energy coupling between electric energy in the winding and the permanent magnet, the electric energy is transformed into rotary mechanical energy to actuate the vehicle.

As can be seen, there is an urgent need in the art for a solution to solve the technical problem that it is difficult to reconcile the performance and the cost of an electric drive system.

### Embodiment One

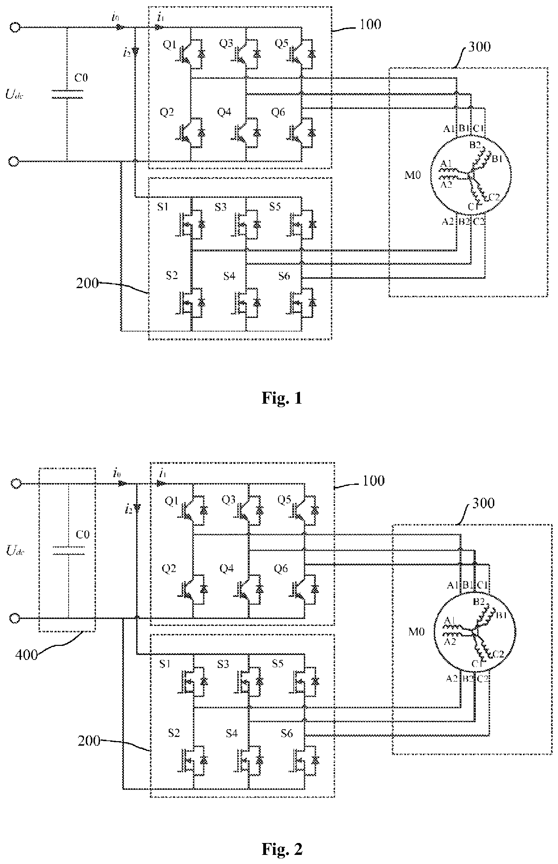

Fig. 1 schematically shows a structure of an electric drive system provided by the present disclosure. As shown in Fig. 1, the present embodiment provides an electric drive system, which includes a motor 300 and a convertor;
the motor 300 includes a first winding and a second winding;
the converter includes a first three-phase bridge 100 and a second three-phase bridge 200;
an input end of the first three-phase bridge 100 is connected to a power source, and an output end of the first three-phase bridge 100 is connected to the first winding of the motor 300; and
an input end of the second three-phase bridge 200 is connected to the power source, and an output end of the second three-phase bridge 200 is connected to the second winding of the motor 300.

In the present embodiment, the motor 300 includes the first winding and the second winding; the input end of the first three-phase bridge 100 is connected to the power source, and the output end of the first three-phase bridge 100 is connected to the first winding of the motor 300; and the input end of the second three-phase bridge 200 is connected to the power source, and the output end of the second three-phase bridge 200 is connected to the second winding of the motor 300.

According to the electric drive system provided in the present embodiment, the motor 300 and the convertor are provided; the motor 300 in configured to include the first winding and the second winding; the converter in configured to includes the first three-phase bridge 100 and the second three-phase bridge 200; the input end of the first three-phase bridge 100 is configured to be connected to the power source, and the output end of the first three-phase bridge 100 is configured to be connected to the first winding of the motor 300; and the input end of the second three-phase bridge 200 is configured to be connected to the power source, and the output end of the second three-phase bridge 200 is configured to be connected to the second winding of the motor 300. In this way, the first three-phase bridge 100 which is of lower cost is committed to transmitting power, and the second three-phase bridge 200 is committed to suppressing harmonics of the first three-phase bridge 100 so as to improve the performance of the electric drive system, thereby solving the technical problem that it is difficult to reconcile the performance and the cost of an electric drive system.

### Embodiment Two

Base on the above embodiment, Fig. 2 schematically shows a structure of another electric drive system provided by the present disclosure. As shown in Fig. 2, the present embodiment provides an electric drive system, in which a motor 300 is a non-equal power dual three-phase motor, wherein a power of the first winding of the motor 300 and a power of the second winding of the motor 300 are not equal with each other.

In some embodiments, the first three-phase bridge 100 includes silicon-based power devices, and the second three-phase bridge 200 includes silicon carbide-based power devices.

In some embodiments, a neutral point of the first winding and a neutral point of the second winding are not connected with each other; and a supportive capacitor 400 is provided in parallel with an input end of the first three-phase bridge 100.

In the present embodiment, the first three-phase bridge 100 formed by silicon-based power devices is mainly composed of six silicon-based IGBT devices. Each of the devices is formed by a unidirectional controllable switch and an antiparallel diode. Every two devices form one bridge arm, and the six devices form three bridge arms in total. Upper ends and lower ends of the bridge arms serve as inputs, and the middle of the bridge arms serve as outputs. The three bridge arms form a complete three-phase bridge, which is connected to the first winding of the non-equal power dual three-phase motor.

In the present embodiment, the second three-phase bridge 200 formed by silicon carbide-based power devices is mainly composed of six silicon carbide-based MOSFET devices. Each of the devices is formed by a unidirectional controllable switch and an antiparallel diode. Every two devices form one bridge arm, and the six devices form three bridge arms in total. Upper ends and lower ends of the bridge arms serve as inputs, and the middle of the bridge arms serve as outputs. The three bridge arms form a complete three-phase bridge, which is connected to the second winding of the non-equal power dual three-phase motor.

In the present embodiment, the non-equal power dual three-phase motor is, for example, a permanent magnet synchronous motor and has two windings, i.e., the first winding referred to as a power winding and the second winding referred to as a performance winding. Each of the windings is formed by connecting a three-phase winding in a Y-type pattern. A three-phase winding of the first winding is named as "A1", "B1", and "C1", and a three-phase winding of the second winding is named as "A2", "B2", and "C2". A neutral point of the first winding and a neutral point of the second winding are not connected with each other. The first winding is connected to the three-phase bridge formed by the silicon-based power devices, and the second winding is connected to the three-phase bridge formed by the silicon carbide-based power devices.

In the present embodiment, the supportive capacitor 400 is a group of electrolytic capacitors, in which a plurality of electrolytic capacitors are combined in series or in parallel based on requirements of a withstand voltage and a capacity.

In the present embodiment, energy is introduced from a battery via a Udc port, and filtering of a direct current and energy supporting is implemented by means of the supportive capacitor 400. Then, the energy is provided to the non-equal power dual three-phase motor 300 through the silicon-based three-phase bridge and the silicon carbide-based three-phase bridge, respectively. The function of the supportive capacitor 400 is to enable filtering of the direct current and energy supporting. The function of the silicon-based three-phase bridge is to convert the direct current to an energy form required by the motor 300. The function of the silicon carbide-based three-phase bridge is to compensate harmonics generated by the silicon-based three-phase bridge and also provide the energy to the motor 300. The function of the non-equal power dual three-phase motor 300 is to receive the energy provided by the silicon-based three-phase bridge and the silicon carbide-based three-phase bridge, respectively, under the condition of ensuring that an alternating current side of the silicon-based three-phase bridge and an alternating current side of the silicon carbide-based three-phase bridge are electrically isolated by a technical means that the neutral point of the first winding and the neutral point of the second winding are not connected with each other, and to enable coupling of the two portions of energy through a magnetic field, so as to realize transformation of the electric energy into the mechanical energy.

According to the technical solution of the present embodiment, the first three-phase bridge 100 is configured to include the silicon-based power devices and the second three-phase bridge 200 is configured to include the silicon carbide-based power devices so that a converter is formed by the two three-phase bridges. The first three-phase bridge 100 formed by the silicon-based power devices is committed to primary power transmission, which reduces the cost of the converter, and the second three-phase bridge 200 formed by the silicon carbide-based power devices is committed to performance optimization, which improves the performance of the converter, thereby solving the technical problem that it is difficult to reconcile the performance and the cost of an electric drive system.

### Embodiment Three

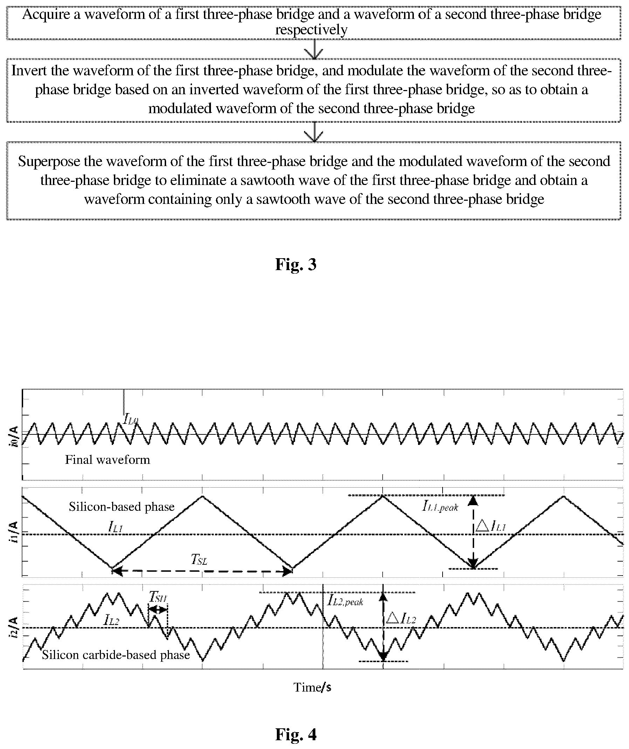

Fig. 3 schematically shows a flowchart of a control method of the electric drive system provided by the present disclosure. As shown in Fig. 3, based on the above embodiments, the present embodiment provides a control method of the electric drive system, including a step of:
superposing a waveform of the first three-phase bridge 100 and a waveform of the second three-phase bridge 200 to eliminate a sawtooth wave of the first three-phase bridge 100 and obtain a waveform containing only a sawtooth wave of the second three-phase bridge 200.

In some embodiments, the step of superposing the waveform of the first three-phase bridge 100 and the waveform of the second three-phase bridge 200 includes:
acquiring the waveform of the first three-phase bridge 100 and the waveform of the second three-phase bridge 200, respectively;
inverting the waveform of the first three-phase bridge 100, and modulating the waveform of the second three-phase bridge 200 based on an inverted waveform of the first three-phase bridge 100, so as to obtain a modulated waveform of the second three-phase bridge 200; and
superposing the waveform of the first three-phase bridge 100 and the modulated waveform of the second three-phase bridge 200 to eliminate the sawtooth wave of the first three-phase bridge 100 and obtain the waveform containing only the sawtooth wave of the second three-phase bridge 200.

Fig. 4 schematically shows a waveform of the control method of the electric drive system provided by the present disclosure. In the present embodiment, the principle of the above control method is described with reference to Fig. 4. The principle is as follows: a silicon-based three-phase bridge is committed to transmitting primary energy, and a silicon carbide-based three-phase bridge is committed to compensating harmonics, so as to improve the harmonic performance of the entire system and further lower the cost.

In terms of the harmonics, due to PWM, a sawtooth wave is generated at the input and the output of a three-phase bridge circuit, and a period, a peak-to-peak value, and a THD of the sawtooth wave are inversely correlated with a switching frequency of the bridge circuit, so that a higher switching frequency means a better harmonic performance. For the silicon-based first three-phase bridge 100, due to a limitation by the switching frequency of a silicon device, a peak-to-peak value and a period of a sawtooth wave of the silicon-based first three-phase bridge 100 are illustrated by *i*₁ in Fig. 4; and as the silicon carbide-based second three-phase bridge 200 has a higher switching frequency, a peak-to-peak value and a period of a sawtooth wave of the silicon carbide-based second three-phase bridge 200 are much less than that of the sawtooth wave of the silicon-based first three-phase bridge 100. Therefore, it is possible to modulate the silicon carbide-based second three-phase bridge 200 by using an inverted sawtooth wave of the silicon-based first three-phase bridge 100, so as to obtain a waveform illustrated by *i*₂ in Fig. 4. By superposing the waveform of the silicon-based first three-phase bridge 100 and the waveform of the silicon carbide-based second three-phase bridge 200, the sawtooth wave of the silicon-based first three-phase bridge 100 can be eliminated, and thus a waveform containing only the sawtooth wave of the silicon carbide-based second three-phase bridge 200, as illustrated by *i*₀ in Fig. 4, can be obtained. A peak-to-peak value and a period of the sawtooth wave in this waveform are greatly reduced, and a total harmonic distortion THD reaches a level of the silicon carbide-based second three-phase bridge 200 in a full-power state.

In terms of energy allocation, as the silicon-based first three-phase bridge 100 is committed to transmitting primary power, the silicon carbide-based second three-phase bridge 200 simply needs to output a power with a quantity following an amplitude value of the sawtooth wave of the silicon-based first three-phase bridge 100, so that harmonics of a total waveform can be minimized thereby. With respect to the numerical value, I_{L0}≈I_{L1}>>I_{L2}.

In terms of the cost, since the silicon-based first three-phase bridge 100 is committed to transmitting most of the power, a power level of the devices of the silicon carbide-based second three-phase bridge 200 generally simply needs to be about 20% of a rated power. Therefore, the cost of the system by using the silicon carbide devices will be greatly reduced, and since the cost of the silicon-based devices is much less than that of the silicon carbide devices of the same scale, the cost of the system with mix-use of power devices is much less than the cost of the system with silicon carbide devices only.

According to the technical solution of the present embodiment, the waveform of the first three-phase bridge 100 is inverted and the waveform of the second three-phase bridge 200 is modulated based on an inverted waveform of the first three-phase bridge 100, so as to obtain a modulated waveform of the second three-phase bridge 200. Based on this, the waveform of the first three-phase bridge 100 and the modulated waveform of the second three-phase bridge 200 are superposed to eliminate the sawtooth wave of the first three-phase bridge 100 and obtain a waveform containing only the sawtooth wave of the second three-phase bridge 200. In this way, the performance of the first three-phase bridge 100 is optimized by using the second three-phase bridge 200 formed by the silicon carbide-based power devices, so that the performance of the converter is improved.

### Embodiment Four

Based on the above embodiments, the present embodiment provides a control apparatus of the electric drive system, which includes:
a control unit, which is configured to superpose a waveform of the first three-phase bridge 100 and a waveform of the second three-phase bridge 200 to eliminate a sawtooth wave of the first three-phase bridge 100 and obtain a waveform containing only a sawtooth wave of the second three-phase bridge 200.

According to the technical solution of the present embodiment, the waveform of the first three-phase bridge 100 is inverted and the waveform of the second three-phase bridge 200 is modulated based on an inverted waveform of the first three-phase bridge 100, so as to obtain a modulated waveform of the second three-phase bridge 200. Based on this, the waveform of the first three-phase bridge 100 and the modulated waveform of the second three-phase bridge 200 are superposed to eliminate the sawtooth wave of the first three-phase bridge 100 and obtain a waveform containing only the sawtooth wave of the second three-phase bridge 200. In this way, the performance of the first three-phase bridge 100 is optimized by using the second three-phase bridge 200 formed by the silicon carbide-based power devices, so that the performance of the converter is improved.

### Embodiment Five

Based on the above embodiments, the present embodiment provides a computer readable storage medium, on which a computer program is stored, wherein the computer program, when being executed by a processor, implements the method in the above embodiments.

The above storage medium may be a flash memory, a hard disk, a multimedia card, a card-type memory (e.g., an SD or DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disk, a server, an App application store, or the like.

Reference can be made to previous embodiments for details of the method, which are not described any further in the present embodiment.

### Embodiment Six

Based on the above embodiments, the present embodiment provides an electronic device, which includes a processor and a memory on which a computer program is stored, wherein the computer program, when being executed by the processor, implements the method in the above embodiments.

The processor may be implemented by an application specific integrated circuit (ASIC for short), a digital signal processor (DSP for short), a digital signal processing device (DSPD for short), a programmable logic device (PLD for short), a field programmable gate array (FPGA for short), a controller, a microcontroller, a microprocessor, or another electronic element, and is configured to perform the method in the above embodiments. Reference can be made to previous embodiments for details of the method, which are not described any further in the present embodiment.

The memory may be implemented by any type of volatile or non-volatile storage device or a combination thereof, for example, a static random access memory (SRAM for short), an electrically erasable programmable read-only memory (EEPROM for short), an erasable programmable read-only memory (EPROM for short), a programmable read-only memory (PROM for short), a read-only memory (ROM for short), a magnetic memory, a flash memory, a magnetic disk, or an optical disk.

In the embodiments provided by the present disclosure, it should be understood that the disclosed apparatus and method may also be implemented in other manners. The apparatus embodiment described above is merely illustrative. For example, the flowchart and block diagram in the accompanying drawings show possible architectures, functions and operations of the apparatus, method and computer program product according to various embodiments of the present disclosure. In this regard, each block in the flowchart or block diagram may represent a module, a program segment, or a portion of code which contains one or more executable instructions for implementing a specified logical function. It should also be noted that in some alternative implementation manners, the functions illustrated in the blocks may also occur in a different order from those illustrated in the accompanying drawings. For example, two consecutive blocks may actually be executed substantially in parallel, or they may sometimes be executed in a reverse order, depending on the functions involved. It should also be noted that each block in the block diagram and/or flowchart, and combinations of blocks in the block diagram and/or flowchart, may be implemented by a dedicated hardware-based system that performs the specified functions or actions, or may be implemented by a combination of dedicated hardware and computer instructions.

### Embodiment Seven

Based on the above embodiments, the present embodiment provides an electric vehicle, which includes:
the electric drive system in the above embodiments.

In some implementation manners, the electric vehicle further includes the control apparatus of the electric drive system, the computer readable storage medium, and/or the electronic device in the above embodiments.

Reference can be made to previous embodiments for details of the electric drive system, the control apparatus, the computer readable storage medium and/or the electronic device, which are not described any further in the present embodiment.

### Embodiment Eight

Based on the above embodiments, the present embodiment provides a comprehensive example. An electric drive of an electric vehicle based on mix-use of power devices as well as a non-equal power dual three-phase motor in the present disclosure includes four main parts, i.e., a three-phase bridge formed by silicon-based power devices, a three-phase bridge formed by silicon carbide-based power devices, a non-equal power dual three-phase motor, and a supportive capacitor 400.

A first three-phase bridge 100 formed by the silicon-based power devices is mainly composed of six silicon-based IGBT devices. Each of the devices is formed by a unidirectional controllable switch and an antiparallel diode. Every two devices form one bridge arm, and six devices form three bridge arms in total. Upper ends and lower ends of the bridge arms serve as inputs, and the middle of the bridge arms serve as outputs. Three bridge arms form a complete three-phase bridge, which is connected to a first winding of the non-equal power dual three-phase motor.

A second three-phase bridge 200 formed by the silicon-based power devices is mainly composed of six silicon carbide-based MOSFET devices. Each of the devices is formed by a unidirectional controllable switch and an antiparallel diode. Every two devices form one bridge arm, and six devices form three bridge arms in total. Upper ends and lower ends of the bridge arms serve as inputs, and the middle of the bridge arms serve as outputs. Three bridge arms form a complete three-phase bridge, which is connected to a second winding of the non-equal power dual three-phase motor.

The non-equal power dual three-phase motor is, for example, a permanent magnet synchronous motor and has two windings, i.e., the first winding referred to as a power winding and the second winding referred to as a performance winding. Each of the windings is formed by connecting a three-phase winding in a Y-type pattern. A three-phase winding of the first winding is named as "A1", "B1", and "C1", and a three-phase winding of the second winding is named as "A2", "B2", and "C2". A neutral point of the first winding and a neutral point of the second winding are not connected with each other. The first winding is connected to the three-phase bridge formed by the silicon-based power devices, and the second winding is connected to the three-phase bridge formed by the silicon carbide-based power devices.

The supportive capacitor 400 is a group of electrolytic capacitors. A plurality of electrolytic capacitors are combined in series or in parallel based on requirements of a withstand voltage and a capacity.

Based on this, a function of a system is described as below. As shown in Fig. 1 and Fig. 2, the function of the system for the electric drive of the electric vehicle based on mix-use of power devices as well as a non-equal power dual three-phase motor is to transform the electric energy into the mechanical energy so as to provide power to the electric vehicle. Specific functions are as follows:
(1) According to electric drive of the electric vehicle, energy is introduced from a battery via a Udc port, and filtering of a direct current and energy supporting is implemented by means of the supportive capacitor 400. Then, the energy is provided to the non-equal power dual three-phase motor through the silicon-based three-phase bridge and the silicon carbide-based three-phase bridge, respectively.
(2) The function of the supportive capacitor 400 is to enable filtering of the direct current and energy supporting.
(3) The function of the silicon-based three-phase bridge is to convert the direct current to an energy form required by the motor 300.
(4) The function of the silicon carbide-based three-phase bridge is to compensate harmonics generated by the silicon-based three-phase bridge and provide the energy to the non-equal power dual three-phase motor.
(5) The function of the non-equal power dual three-phase motor is to receive the energy provided by the silicon-based three-phase bridge and the silicon carbide-based three-phase bridge, respectively, under the condition of ensuring that an alternating current side of the silicon-based three-phase bridge and an alternating current side of the silicon carbide-based three-phase bridge are electrically isolated by a technical means that the neutral point of the first winding and the neutral point of the second winding are not connected with each other, and to couple the two portions of energy through a magnetic field, so as to realize transformation of electric energy into mechanical energy.

Based on this, a principle of the system is described as below. The principle of the system for the electric drive of the electric vehicle based on mix-use of power devices as well as a non-equal power dual three-phase motor is as follows: the silicon-based three-phase bridge is committed to transmitting primary energy, and the silicon carbide-based three-phase bridge is committed to compensating harmonics, so as to improve the harmonic performance of the entire system and further lower the cost.

In terms of the harmonics, due to PWM, a sawtooth wave is generated at the input and the output of a three-phase bridge circuit, and a period, a peak-to-peak value, and a THD of the sawtooth wave are inversely correlated with a switching frequency of the bridge circuit, so that a higher switching frequency means a better harmonic wave performance. For the silicon-based three-phase bridge, due to a limitation by the switching frequency of a silicon device, a peak-to-peak value and a period of a sawtooth wave of the silicon-based three-phase bridge are illustrated by *i*₁ in Fig. 4; and as the silicon carbide-based three-phase bridge has a higher switching frequency, a peak-to-peak value and a period of a sawtooth wave of the silicon carbide-based three-phase bridge is much less than that of the sawtooth wave of the silicon-based three-phase bridge. Therefore, it is possible to modulate the silicon carbide-based three-phase bridge by using an inverted sawtooth wave of the silicon-based three-phase bridge, so as to obtain a waveform illustrated by *i*₂ in Fig. 4. By superposing the waveform of the silicon-based three-phase bridge and the waveform of the silicon carbide-based three-phase bridge, the sawtooth wave of the silicon-based three-phase bridge can be eliminated, and thus a waveform containing only the sawtooth wave of the silicon carbide-based three-phase bridge, as illustrated by *i*₀ in Fig. 4, can be obtained. A peak-to-peak value and a period of the sawtooth wave in this waveform are greatly reduced, and a total harmonic distortion THD reaches a level of the silicon carbide-based three-phase bridge in a full-power state.

In terms of energy allocation, as the silicon-based three-phase bridge is committed to transmitting primary power, the silicon carbide-based three-phase bridge simply needs to output a power with a quantity following an amplitude value of the sawtooth wave of the silicon-based three-phase bridge, so that harmonics of a total waveform can be minimized thereby. With respect to the numerical value, I_{L0}≈ I_{L1}>>I_{L2}.

In terms of the cost, since the silicon-based three-phase bridge is committed to transmitting most of the power, a power level of the devices of the silicon carbide-based three-phase bridge generally simply needs to be about 20% of a rated power. Therefore, the cost of the system by using the silicon carbide devices will be greatly reduced, and since the cost of the silicon-based devices is much less than that of the silicon carbide devices of the same scale, the cost of the system with mix-use of power devices is much less than the cost of the system with silicon carbide devices only.

Beneficial effects of the present disclosure lie in aspects such as the harmonic performance, the cost, the efficiency, and the supportive capacitor. Comparison objects are a conventional silicon-based three-phase bridge and a conventional silicon carbide-based three-phase bridge, and comparisons therebetween are shown in Table 1.

**Table 1 Comparisons on Beneficial Effects of the Present Solution**

| **Comparison objects** | **The present disclosure** | **Three-phase bridge based on silicon only** | **Three-phase bridge based on silicon carbide only** |
|---|---|---|---|
| Harmonics | Low | High | Low |
| Cost | Medium | Low | High |
| Efficiency | High | Low | High |
| Supportive capacitor | Medium | Large | Small |

| | | | |
|---|---|---|---|
| Note: All conclusions in this table are relative values. | | | |

It can be seen from Table 1 that, the technical solution of the present disclosure has a considerable advantage in terms of the harmonics, the cost, the efficiency, and the supportive capacitor. The harmonic performance and the efficiency can reach a level of that of the silicon carbide-based three-phase bridge; the cost is slightly higher than that of the silicon-based three-phase bridge, but is much less than that of the silicon carbide-based three-phase bridge; and the supportive capacitor is smaller than that of a conventional silicon-based three-phase bridge.

In order to solve the problem of cost-performance ratio for the electric drive of the vehicle, that is, a silicon-only device having an unsatisfying performance while a silicon carbide-only device having an overly high cost, in the embodiments of the present disclosure, the silicon devices and the silicon carbide devices are applied in a mixed manner. The silicon devices are committed to transmitting most of the power, and the silicon carbide devices transmitting a lower power are committed to performance optimization, so that the cost-performance ratio is optimized. Thus, the cost of the electronic control is reduced, and cost-performance ratio of the electric drive of the vehicle is improved. A performance equivalent to the performance using the silicon carbide-only devices is obtained with a price lower than the price using the silicon carbide-only devices.

In order to solve the problem of loop current and energy coupling during mix-use of the silicon devices and the silicon carbide devices, the present disclosure uses the non-equal power dual three-phase motor, and connects a loop of the silicon devices and a loop of the silicon carbide devices respectively to two electrically isolated windings of the non-equal power dual three-phase motor, so as to realize electrical isolation and magnetic coupling between the loop of the silicon devices and the loop of the silicon carbide devices. Energy coupling at output sides of the loop of the silicon devices and the loop of the silicon carbide devices can be achieved, and the problem of loop current during mix-use of the silicon devices and the silicon carbide devices can be solved.

In order to solve the performance problem of the motor for the electric drive of the vehicle in terms of harmonics and vibration, the present disclosure adds a low-power winding to connect to the loop of the silicon carbide devices on the basis of a common single three-phase motor, so as to suppress the harmonics of the motor, reduce the vibration of the motor, and improve the performance of the motor. By improving the performance of the motor, suppressing the harmonics of the motor, and reducing the vibration of the motor, the efficiency of the motor can be improved.

The present disclosure provides an electric drive system, and a method, apparatus, storage medium, electronic device, and electric vehicle of the same. The motor and the convertor are provided; the motor is configured to include the first winding and the second winding; the converter is configured to include the first three-phase bridge and the second three-phase bridge; an input end of the first three-phase bridge is configured to be connected to a power source, and an output end of the first three-phase bridge is configured to be connected to the first winding of the motor; and an input end of the second three-phase bridge is configured to be connected to the power source, and an output end of the second three-phase bridge is configured to be connected to the second winding of the motor 300. In this way, the lower-cost first three-phase bridge is used to perform power transmission, and the second three-phase bridge is used to suppress harmonics of the first three-phase bridge so as to improve the performance of the electric drive system, thereby solving the technical problem that it is difficult to reconcile the performance and the cost of an electric drive system.

In the embodiments provided by the present disclosure, it should be understood that the disclosed apparatus and method may also be implemented in other manners. The apparatus embodiment described above is merely illustrative. For example, the flowchart and block diagram in the accompanying drawings show possible architectures, functions and operations of the apparatus, method and computer program product according to various embodiments of the present disclosure. In this regard, each block in the flowchart or block diagram may represent a module, a program segment, or a portion of code which contains one or more executable instructions for implementing specified logical functions. It should also be noted that in some alternative implementation manners, the functions illustrated in the blocks may also occur in a different order from those illustrated in the accompanying drawings. For example, two consecutive blocks may actually be executed substantially in parallel, or they may sometimes be executed in a reverse order, depending on the functions involved. It should also be noted that each block in the block diagram and/or flowchart and combinations of blocks in the block diagram and/or flowchart may be implemented with a dedicated hardware-based system that performs the specified functions or actions, or may be implemented with a combination of dedicated hardware and computer instructions.

It should be noted that, in the present disclosure, the terms "comprise", "include", or any other variations thereof, are intended to cover a non-exclusive inclusion, such that a process, method, article, or apparatus that comprises a list of elements includes not only those elements but also other elements not expressly listed or inherent to such process, method, article, or apparatus. An element preceded by "comprises a ..." does not, without more constraints, preclude the existence of additional identical elements in the process, method, article, or apparatus that comprises the element.

Although the implementation manners disclosed in the present disclosure are disclosed as above, the above embodiments are described only for better understanding, rather than restricting, the present disclosure. Any person skilled in the art can make any amendment or change to the implementing forms or details without departing from the spirit and scope of the present disclosure, but the patent protection scope of the present disclosure shall still be determined by the scope as defined in the claims.

## Claims

1. An electric drive system, comprising: a motor and a converter;
wherein the motor comprises a first winding and a second winding;
the converter comprises a first three-phase bridge and a second three-phase bridge;
an input end of the first three-phase bridge is connected to a power source, and an output end of the first three-phase bridge is connected to the first winding of the motor; and
an input end of the second three-phase bridge is connected to the power source, and an output end of the second three-phase bridge is connected to the second winding of the motor.

2. The electric drive system according to claim 1, **characterized in that** the motor is a non-equal power dual three-phase motor, wherein the first winding of the motor and the second winding of the motor have unequal powers.

3. The electric drive system according to claim 1, **characterized in that** the first three-phase bridge comprises silicon-based devices, and the second three-phase bridge comprises silicon carbide-based devices.

4. The electric drive system according to claim 1, **characterized in that** a neutral point of the first winding and a neutral point of the second winding are not connected with each other; and a supportive capacitor is provided in parallel at the input end of the first three-phase bridge.

5. A control method based on the electric drive system according to any one of claims 1 to 4, which comprises:
superposing a waveform of the first three-phase bridge and a waveform of the second three-phase bridge to eliminate a sawtooth wave of the first three-phase bridge and obtain a waveform containing only a sawtooth wave of the second three-phase bridge.

6. The method according to claim 5, **characterized in that** superposing a waveform of the first three-phase bridge and a waveform of the second three-phase bridge comprises:
acquiring the waveform of the first three-phase bridge and the waveform of the second three-phase bridge, respectively;
inverting the waveform of the first three-phase bridge, and modulating the waveform of the second three-phase bridge based on an inverted waveform of the first three-phase bridge, so as to obtain a modulated waveform of the second three-phase bridge; and
superposing the waveform of the first three-phase bridge and the modulated waveform of the second three-phase bridge to eliminate the sawtooth wave of the first three-phase bridge and obtain the waveform containing only the sawtooth wave of the second three-phase bridge.

7. A control apparatus based on the electric drive system according to any one of claims 1 to 4, comprising:
a control unit, which is configured to superpose a waveform of the first three-phase bridge and a waveform of the second three-phase bridge to eliminate a sawtooth wave of the first three-phase bridge and obtain a waveform containing only a sawtooth wave of the second three-phase bridge.

8. A computer readable storage medium, on which a computer program is stored, wherein the computer program, when being executed by a processor, implements the method according to claim 5 or 6.

9. An electronic device, comprising a processor and a memory on which a computer program is stored, wherein the computer program, when being executed by the processor, implements the method according to claim 5 or 6.

10. An electric vehicle, comprising:
the electric drive system according to any one of claims 1 to 4.
